Europäisches Patentamt

European Patent Office

Office européen des brevets

(19)

(11) Veröffentlichungsnummer: **0 177 705**
**B1**

(12) **EUROPÄISCHE PATENTSCHRIFT**

(45) Veröffentlichungstag der Patentschrift: **18.07.90**

(21) Anmeldenummer: **85109870.7**

(22) Anmeldetag: **06.08.85**

(51) Int. Cl.⁵: **B 61 B 1/00**, B 61 J 1/10, B 61 D 47/00

(54) **Verfahren zum Verladen von Fahrzeugen auf Eisenbahnwaggons.**

(30) Priorität: **06.10.84 DE 3436721**

(43) Veröffentlichungstag der Anmeldung:
**16.04.86 Patentblatt 86/16**

(45) Bekanntmachung des Hinweises auf die
Patenterteilung:
**18.07.90 Patentblatt 90/29**

(84) Benannte Vertragsstaaten:
**DE FR IT SE**

(56) Entgegenhaltungen:
**CH-A- 549 493**
**DE-A-2 148 899**
**DE-A-2 342 080**
**DE-A-2 813 221**

(73) Patentinhaber: **AUDI AG**
**Auto-Union-Strasse 1 Postfach 220**
**D-8070 Ingolstadt (DE)**

(72) Erfinder: **Hainzinger, Franz**
**Birkenstrasse 17**
**D-8076 Baar-Ebenhausen (DE)**
Erfinder: **Ebert, Joachim**
**Lutzener Strasse 9**
**D-8070 Ingolstadt (DE)**

(74) Vertreter: **Engelhardt, Harald**
**Audi AG Postfach 2 20**
**D-8070 Ingolstadt (DE)**

Courier Press, Leamington Spa, England.

**Beschreibung**

Die Erfindung bezieht sich auf ein bekanntes Verfahren zum Verladen von Fahrzeugen auf Eisenbahnwaggons gemäß dem Oberbegriff des Anspruchs 1 bzw. des Anspruchs 3.

Fahrzeuge werden meist so auf Eisenbahnwaggons verladen, daß sie über eine einfache oder Doppelstockrampe auf die bereitgestellten, zur Aufnahme von Fahrzeugen vorgesehenen Eisenbahnwaggons gefahren werden. Um die miteinander gekoppelten Eisenbahnwaggons vollständig mit Fahrzeugen zu bestücken, ist es notwendig, daß die einzelnen Fahrzeuge über eine Vielzahl von Waggons bewegt werden, bis alle Eisenbahnwaggons beladen sind. Das Bewegen der Fahrzeuge auf den Eisenbahnwaggons oft über eine Strecke von mehreren hundert Metern ist sehr unwirtschaftlich und mit großem Lärm verbunden. Aufgrund der langen Strecken ist es außerdem notwendig, die Fahrer der Fahrzeuge zurückzuholen. Da es meist nicht möglich ist, den gesamten Bereich zu überdachen, sind die Fahrer beim Verlassen ihrer Fahrzeuge jeder Witterung ausgesetzt. Besonders bei Regen, Eis und Schnee stellt das Herabsteigen von den Eisenbahnwaggons eine hohe Unfallgefahr dar.

Um für die Arbeiter einen stationären Arbeitsplatz zu schaffen, ist deshalb ein Verfahren zum Verladen von Fahrzeugen auf Eisenbahnwaggons entwickelt worden, bei dem diese mittels eines Verholwagens von einem Anschlußgleis auf einen Gleisabschnitt einer quer zu dem Anschlußgleis verschiebbaren Bühne aufgeschoben, dort über eine Rampe mit Fahrzeugen beladen und nach Verschieben der Bühne auf ein anderes Anschlußgleis abgeschoben werden.

Der Erfindung liegt die Aufgabe zugrunde, ein gattungsgemäßes Verfahren so weiterzubilden, daß mit einfachen Mitteln die Wirtschaftlichkeit wesentlich erhöht wird.

Die Aufgabe wird durch die kennzeichnenden Merkmale des Anspruchs 1 bzw. des Anspruchs 3 gelöst.

Der Mehraufwand zur Durchführung des erfindungsgemäßen Verfahrens besteht nur in der Anordnung eines zweiten Gleisabschnittes auf der vorhandenen Bühe. Die Verladevorrichtung, welche nach dem bekannten Verfahren arbeitet weist ebenfalls drei Anschlußgleise auf, wobei eines nur dazu dient, aussortierte leere Eisenbahnwaggons aufzunehmen.

Dadurch, daß die bei dem erfindungsgemäßen Verfahren eingesetzte Bühne zwei Gleisabschnitte aufweist ist es bei der gekennzeichneten Zuführung von leeren Eisenbahnwaggons auf den äußeren Anschlußgleisen und dem Abführen der beladenen Eisenbahnwaggon auf dem mittleren Anschlußgleis möglich, einen leeren Eisenbahnwaggons auf die Bühne zu schieben und gleichzeitig einen bereits auf der Bühne befindlichen Eisenbahnwaggon mit Fahrzeugen zu beladen und auf das mittlere Anschlußgleis abzuschieben. In der Praxis hat sich gezeigt, daß das Beladen mit Fahrzeugen schneller vor sich geht als das Verschieben eines leeren Eisenbahnwaggons auf die Bühne. Während des Aufschiebens des leeren Eisenbahnwaggons ist es deshalb möglich, den zweiten Eisenbahnwaggon zu belanden und zumindest den Abschiebevorgang des beladenen Eisenbahnwaggons einzuleiten.

Im Gegensatz zu dem bekannten Verfahren entstehen kaum Leerzeiten für das Bedienungspersonal. Durch das Bedienungspersonal werden bei beiden Verfahren die Eisenbahnwaggons an- und abgekoppelt und zusätzliche Arbeiten (wie beispielsweise das Anheben- und Absenken der oberen Ladefläche der Eisenbahnwaggons, daß Festmachen der Fahrzeuge und das Ausschwenken bzw. Einfahren von Brücken an den Eisenbahnwaggons) übernommen. Alle diese Tätighkeiten werden vorteilhaft dann ausgeführt, wenn sich die Eisenbahnwaggons auf den Anschlußgleisen und nicht auf der Bühne befinden.

Die Eisenbahnwaggons werden zweckmäßig durch am Ende jeden Gleisabschnitts auf der Bühne angeordnete Verholwägen auf die Bühne gezogen bzw. abgeschoben.

Es ist möglich, nur eine Rampe (bzw. Doppelstockrampe für doppelstöckige Eisenbahnwaggons) gegenüber dem mittleren Anschlußgleis vorzusehen. In gleicher Weise können jedoch auch zwei Rampen (bzw. Doppelstockrampen) gegenüber den äußeren, die leeren Eisenbahnwaggons zuführenden Anschlußgleisen vorgesehen werden. Je nach den baulichen Gegebenheiten, der Art der Beladung und sonstiger Gegebenheiten kann die Vorsehung einer oder zweier Rampen vorteilhafter sein. An Stelle von einzelnen Rampen kann auch eine (ein- oder zweistöckige) Plattform eingesetzt werden, welche die Zufahrt an beliebiger Stelle gewährleistet. Es ist natürlich auch möglich, auf der Bühe in Verbindung mit weiteren Anchlußgleisen drei oder gar mehrere Gleisabschnitte vorzusehen. Wenn eine Erhöhung der an sich durch das erfindungsgemäße Verfahren sehr hohen Ladekapazität trotzdem erforderlich sein sollte, dann scheint es zweckmäßiger, zwei Bühnen mit je zwei Gleisabschnitten vorzusehen.

Zurückkommend auf das im Anspruch 1 gekennzeichnete Verfahren mit drei Anschlußgleisen kann es jedoch trotzdem günstig sein, ein viertes Anschlußgleis vorzusehen, welches im Anschlußbereich an die Bühne im gleichen Abstand wie die übringen Anschlußgleise angeordnet ist. Dadurch ist die Möglichkeit geschaffen, in Sonderfällen bestimmte Waggons vom eigentlichen Verfahrensablauf herauszunehmen.

Das erfindungsgemäße Verfahren wird anhand der Zeichnung dargestellt und im folgenden näher beschrieben, Es zeigt

Fig. 1 eine Draufsicht einer Verladevorrichtung mit Anschlußgleisn,

Fig. 2 eine Seitenansicht der Verladevorrichtung und

Fig. 3 in schematischer Darstellung den Ablauf beim Beladen von sechs leeren Eisenbahnwaggons mit Fahrzeugen.

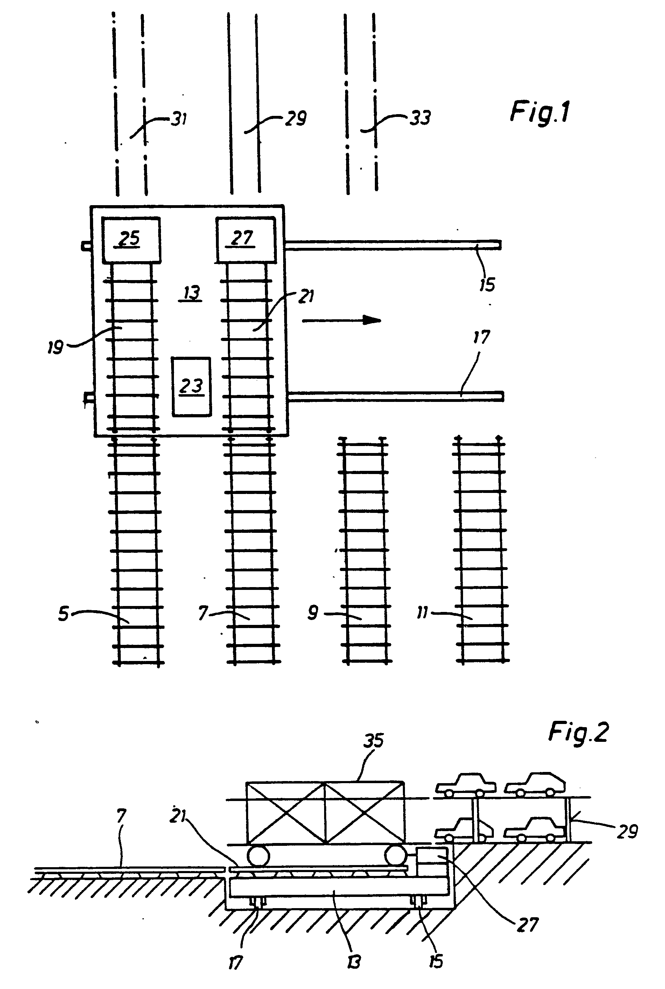

Fig. 1 zeigt vier im gleichen Abstand nebeneinander angeordnete Anschlußgleise 5, 7, 9 und 11. Alle

# EP 0 177 705 B1

vier Anschlußgleise führen bis an eine Bühne 13 heran, welche durch zwei Schienen 15 und 17 quer zu den Anschlußgleisen verschiebbar ist.

Die Bühne 13 trägt zwei Gleisabschnitte 19 und 21, welche den gleichen Abstand wie die Anschlußgleise aufweisen und bis nahe an die gegenüberliegenden Anschlußgleise heranreichen. Die Bühne 13 nimmt weiter eine Bedieneinheit 23 und zwei Verholwägen 25 und 27 auf. Mittels der beiden Verholwägen lassen sich auf den Anschlußgleisen abgestellte Eisenbahnwaggons auf die Gleisabschnitte 19 bzw. 21 auf der Bühne 13 ziehen und auch wieder auf die Anschlußgleise zurückbewegen. Die Verholwägen 25 und 27 können auf hydraulischer Basis arbeiten und sind mit Einrichtungen zum automatischen An- unde Abkuppeln der Eisenbahnwaggons (nicht dargestellt) versehen.

In Fig. 1 ist außerdem schematisch eine Rampe 29 dargestellt, welche dem mittleren Anschlußgleis 7 gegenüberliegt. Anstelle der Rampe 29 sind alleinig oder zusätzlich Rampen 31 und 33 denkbar, welche den Anschlußgleisen 5 und 9 gegenüberliegen und strichpunktiert dargestellt sind.

Fig. 2 zeigt die Verladevorrichtung aus Fig. 1 in Seitenansicht. Darin ist auch ein doppelstöckiger Eisenbahnwaggon 35 sowie Fahrzeuge zu erkennen, welche über die Rampe 29 (doppelstöckig) in der gezeigten Stellung auf den Eisenbahnwaggon 35 gefahren werden können.

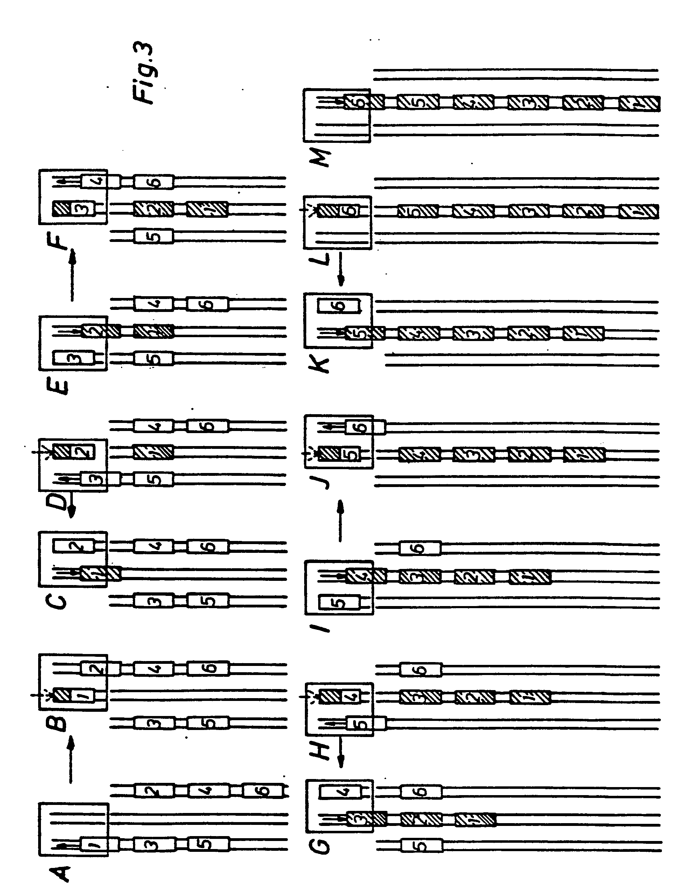

Schließlich zeigt Fig. 3 in schematischer Darstellung das Verladeverfahren anhand von sechs Eisenbahnwaggons. Die einzelnen in der Zeichnung dargestellten Positionen sind mit den Großbuchstablen A bis M gekennzeichnet und in der nachfolgenden Tabelle I beschrieben. In der Zeichnung und in den Tabllen sind die Eisenbahnwaggons mit den Ziffern 1 bis 6 bezeichnet und die jeweilige Verschieberichtung der Bühne mit einem Pfeil angegeben.

In der Tabelle bedeutet

"leer ein" = ein leerer Eisenbahnwaggon wird auf die Bühne gezogen
"beladen" = beladen des auf der Bühne befindlichen Eisenbahnwaggons mit Fahrzeugen
"voll aus" = Schieben des beladenen Eisenbahnwaggons von der Bühne auf das mittlere Anschlußgleis

| | Tabelle I | | Tabelle II |
|---|---|---|---|
| A | 1 leer ein | | 1 leer ein |
| | → verschieben | | 1 beladen |
| B | { 1 beladen / 2 leer ein | | → verschieben |
| | | | 1 voll aus |
| C | 1 voll aus | | 2 leer ein |
| | ← verschieben | | 2 beladen |
| D | { 2 beladen / 3 leer ein | | ← verschieben |
| | | | 2 voll aus |
| E | 2 voll aus | | 3 leer ein |
| | → verschieben | | 3 beladen |
| F | { 3 beladen / 4 leer ein | | → verschieben |
| | | | 3 voll aus |
| G | 3 voll aus | | 4 leer ein |
| | ← verschieben | | 4 beladen |
| H | { 4 beladen / 5 leer ein | | ← verschieben |
| | | | 4 voll aus |
| I | 4 voll aus | | 5 leer ein |
| | → verschieben | | 5 beladen |
| J | { 5 beladen / 6 leer ein | | → verschieben |
| | | | 5 voll aus |
| K | 5 voll aus | | 6 leer ein |
| | ← verschieben | | 6 beladen |
| L | 6 beladen | | ← verschieben |
| M | 6 voll aus | | 6 voll aus |

Tabelle I        Tabelle II

3

Die Tabelle II gibt den Verfahrensablauf wieder (in der Zeichnung nicht dargestellt), wenn anstelle einer dem mittleren Anschlußgleiß 7 gegenüberliegenden Rampe 29 zwei Rampen 31 und 33 eingesetzt werden, welche den Anschlußgleisen 5 und 9 gegenüberliegen.

**Patentansprüche**

1. Verfahren zum Verladen von Fahrzeugen auf Eisenbahnwaggons, wobei diese mittels eines Verholwagens (25, 27) von einen Anschlußgleis (5, 7, 9) auf einen Gleisabschnitt (19, 21) einer quer zu dem Anschlußgleis verschiebbaren Bühne (13) aufgeschoben, dort über eine Rampe (29, 31, 33) mit Fahrzeugen beladen und nach Verschieben der Bühne auf ein anderes Anschlußgleis abgeschoben werden, gekennzeichnet durch folgende Merkmale:

1) Es werden drei Anschlußgleise (5, 7, 9) vorgeshen, welche im Anschlußbereich an die Bühne (13) den gleichen Abstand zueinander aufweisen.

2) Auf den beiden äußeren Anschlußgleisen (5, 9) werden leere Eisenbahnwaggons bereitgestellt.

3) Die Bühne (13) umfaßt zwei im Abstand der Anschlußgleise angeordnete Gleisabschnitte (19, 21) und zwei Verholwagen (25, 27)

4) Gegenüber dem mittleren Anschlußgleis (7) schließt sich die Rampe (29) an die Bühne (13) an.

5a) Das Auf- und Abfahren sowie das Beladen der Eisenbahnwaggons erfolgt in der Weise, daß im Reißverschlußsystem je nach der momentanen Stellung der Bühne (13) einer leerer Eisenbahnwaggon entweder vom linken oder rechten äußeren Anschlußgleis (5 bzw. 9) auf die Bühne (13) geschoben wird und gelichzeitig der sich bereits auf der Bühne zwischen der Rampe (29) und dem mittleren Anschlußgleis (7) befindliche Eisenbahnwaggon beladen und dann das mittlere Anschlußgleis (7) geschoben wird.

5b) Anschließend wird die Bühne (13) so verschoben, daß der leere Eisenbahnwaggon in die "Beladeposition" gelangt und der freie Gleisabschnitt auf der Bühne dadurch zwangläufig zur Aufnahme eines leeren Eisenbahnwaggons einen äußeren Anschlußgleis (5 bzw. 9) gegenüber liegt.

2. Verfahren nach Anspruch 1, dadurch gekennzeichnet, daß anstelle der dem mittleren Anschlußgleis (7) gegenüberliegenden Rampe (29) zwei den beiden äußeren Anschlußgleisen (5 und 9) gegenüberliegende Rampen (31, 33) verwendet werden.

3. Verfahren zum Verladen von Fahrzeugen auf Eisenbahnwaggons, wobei diese mittels eines Verholwagens (25, 27) von einen Anschlußgleis (5, 7, 9, 11) auf einen Gleisabschnitt (19, 21) einer quer zu dem Anschlußgleis verschiebbaren Bühne (13) aufgeschoben, dort über eine Rampe (29, 31, 33) mit Fahrzeugen beladen und nach Verschieben der Bühne auf ein anderes Anschlußgleis abgeschoben werden, gekennzeichnet durch folgende Merkmale:

1) Es werden vier Anschlußgleise (5, 7, 9, 11) vorgesehen, welche im Anschlußbereich an die Bühne (13) den gleichen Abstand zueinander aufweisen.

2) Auf den ersten Anschlußgleis (5) und dem dritten Anschlußgleis (5) werden leere Eisenbahnwaggons bereitgestellt.

3) Die Bühne (13) umfaßt zwei im Abstand der Anschlußgleise angeordnete Gleisabschnitte (19, 21) und zwei Verholwagen (25, 27)

4) Gegenüber dem zweiten Anschlußgleis (7) schließt sich die Rampe (29) an die Bühne (13) an.

5a) Das Auf- und Abfahren sowie das Beladen der Eisenbahnwaggons erfolgt in der Weise, daß im Reißverschlußsystem je nach der momentanen Stellung der Bühne (13) einer leerer Eisenbahnwaggon entweder vom ersten oder dritten Anschlußgleis (5 bzw. 9) auf die Bühne (13) geschoben wird und gleichzeitig der sich bereits auf der Bühne zwischen der Rampe (29) und dem zweiten Anschlußgleis (7) befindliche Eisenbahnwaggon beladen und dann das zweite Anschlußgleis (7) geschoben wird.

5b) Anschließend wird die Bühne (13) so verschoben, daß der leere Eisenbahnwaggon in die "Beladeposition" gelangt und der freie Gleisabschnitt auf der Bühne dadurch zwangläufig zur Aufnahme eines leeren Eisenbahnwaggons dem ersten oder dritten Anschlußgleis (5 bzw. 9) gegenüber liegt.

5c) Das vierte Anschlußgleis (11) steht zur Anfnahme von solchen Eisenbahnwaggons zur Verfügnung, welche in Sonderfällen ans dem eigentlichen Verfahrensablauf heromsgenommen werden sollen.

**Revendications**

1. Procédé pour le chargement de véhicules automobiles sur des wagons de chemin de fer, ceux-ci étant amenés au moyen d'un chariot de halage (25, 27), à partir d'une voie de desserte (5, 7, 9), sur un tronçon de voie (19, 21) d'une plate-forme (13) mobile transversalement par rapport à la voie de desserte, y étant chargés de véhicules automobiles par l'intermédiaire d'une rampe (29, 31, 33) et étant évacués sur une autre voie de desserte après déplacement de la plate-forme, caractérisé par les points suivants:

1) Il est prév trois voies de desserte (5, 7, 9) qui sont à la mème distance mutuelle au niveau de leur raccordement à la plate-forme (13).

2) Des wagons de chemin de fer vides sont préparés sur les deux voies de desserte extérieures (5, 9).

3) La plate-forme (13) comprend deux tronçons de voie (19, 21), disposés à la même distance l'un de l'autre que les voies de desserte, et deux chariots de halage (25, 27).

4) La rampe (29) se raccorde à la plate-forme (13) en face de la voie de desserte du milieu (7).

5a) L'arrivée et le départ, ainsi que le chargement des wagons de chemin de fer s'effectuent, d'après le système de la fermeture à glissière, de la manière suivante: selon la position instantanée de la plate-forme (13), un wagon de chemin de fer vide est amené sur la plate-form (13) depuis la voie de desserte extérieure de gauche ou de droite (5 ou 9) et, en même temps, le wagon de chemin de fer qui se trouve déjà sur la plate-forme entre la rampe (29) et la voie de desserte du milieu (7) est chargé, puis est envoyé sur la voie de desserte du milieu (7).

5b) La plate-forme (13) est ensuite déplacée de sorte que le wagon de chemin de fer vide parvienne dans la "position de chargement" et que le tronçon de voie libre sur la plate-forme se trouve ainsi forcément en face d'une voie de desserte extérieure (5 ou 9) pour recevoir un wagon de chemin de fer vide.

2. Procédé selon la revendication 1, caractérisé en ce qu'à la place de la rampe (29) située en face de la voie de desserte du milieu (7), il est utilisé deux rampes (31, 33) disposées en face des deux voies de desserte extérieures (5 et 9).

3. Procédé pour le chargement de véhicules automobiles sur des wagons de chemin de fer, ceux-ci étant amenés au moyen d'un chariot de halage (25, 27), à partir d'une voie de desserte (5, 7, 9, 11), sur un tronçon de voie (19, 21) d'une plate-forme (13) mobile transversalement par rapport à la voie de desserte, y étant chargés de véhicules autombiles par l'intermédiaire d'une rampe (29, 31, 33) et étant évacués sur une autre voie de desserte après déplacement de la plate-forme, caractérisé par les points suivants:

1) Il est prévu quatre voies de desserte (5, 7, 9, 11) qui sont à la même distance mutuelle au niveau de leur raccordement à la plate-forme (13).

2) Des wagons de chemin de fer vides sont préparés sur la première voies de desserte (5) et sur la troisième voie de desserte (9).

3) La plate-forme (13) comprend deux tronçons de voie (19, 21), disposés à la même distance l'un de l'autre que les voies de desserte, et deux chariots de halage (25, 27).

4) La rampe (29) se raccorde à la plate-forme (13) en face de la deuxième voie de desserte (7).

5a) L'arrivée et le départ, ainsi que le chargement des wagons de chemin de fer s'effectuent, d'après le système de la fermeture à glissière, de la manière suivante: selon la position instantanée de la plate-forme (13), un wagon de chemin de fer vide est amené sur la plate-form (13) depuis la première ou la troisième voie de desserte (5 ou 9) et, en même temps, le wagon de chemin de fer qui se trouve déjà sur la plate-forme entre la rampe (29) et la deuxième voie de desserte (7) est chargé, puis est envoyé sur la deuxième voie de desserte (7).

5b) La plate-forme (13) est ensuite déplacée de sorte que le wagon de chemin de fer vide parvienne dans la "position de chargement" et que le tronçon de voie libre sur la plate-forme se trouve ainsi forcément en face de la première ou de la troisième voie de desserte (5 ou 9) pour recevoir un wagon de chemin de fer vide.

5c) La quatrième voie de desserte (11) est disponible pour recevoir des wagons de chemin de fer qui, dans des cas exceptionnels, doivent être exclus du déroulement du procédé proprement dit.

**Claims**

1. Process for the loading of vehicles onto railway wagons, the latter being moved by means of a shifting wagon (25, 27) from a branch track (5, 7, 9) onto a track section (19, 21) of a platform (13), which is displaceable transversely to the branch track, being loaded there with vehicles via a ramp (29, 31, 33) and, after displacement of the platform, being moved off onto another branch track, characterized by the following features:

1) Three branch tracks (5, 7, 9) are provided which have the same mutual distance in the region of connection to the platform (13).

2) Empty railway wagons are available on the two outer branch tracks (5, 9).

3) The platform (13) comprises two track sections (19, 21), arranged at the distance of the branch tracks, and two shifting wagons (25, 27).

4) The ramp (29) adjoins the platform (13) opposite the central branch track (7).

5a) The roll-on and roll-off and the loading of the railway wagons is effected in such a way that, depending on the momentary position of the platform (13), an empty railway wagon is moved onto the platform (13) either from the left or the right outer branch track (5 or 9) in a zip-type system and, at the same time, the railways wagon already situated on the platform between the ramp (29) and the central branch track (7) is loaded and then moved onto the central branch track (7).

5b) Subsequently, the platform (13) is moved in such a way that the empty railway wagon passes into the "loading position" and the free track section on the platform is thus inevitably located opposite an outer branch track (5 or 9) to receive an empty railway wagon.

2. Process according to Claim 1, characterized in that, instead of the ramp (29) located opposite the central branch track (7), two ramps (31, 33) are used which are located opposite the two outer branch tracks (5 and 9).

3. Process for the loading of vehicles onto railway wagons, the latter being moved by means of a shifting wagon (25, 27) from a branch track (5, 7, 9, 11) onto a track section (19, 21) of a platform (13), which is displaceable transversely to the branch track, being loaded there with vehicles via a ramp (29, 31, 33) and, after displacement of the platform, being moved off onto another branch track, characterized by the following features:

1) Four branch tracks (5, 7, 9, 11) are provided which have the same mutual distance in the region of connection to the platform (13).

2) Empty railway wagons are available on the first branch track (5) and the third branch track (9).

3) The platform (13) comprises two track sections (19, 21), arranged at the distance of the branch tracks, and two shifting wagons (25, 27).

4) The ramp (29) adjoins the platform (13) opposite the second branch track (7).

5a) The roll-on and roll-off and the loading of the railway wagons is effected in such a way that, depending on the momentary position of the platform (13), an empty railway wagon is moved onto the platform (13) either from the first or the third track (5 or 9) in a zip-type system and, at the same time, the railways wagon already situated on the platform between the ramp (29) and the second branch track (7) is loaded and then moved onto the second branch track (7).

5b) Subsequently, the platform (13) is moved in such a way that the empty railway wagon passes into the "loading position" and the free track section on the platform is thus inevitably located opposite the first or third branch track (5 or 9) to receive an empty railway wagon.

5c) The fourth branch track (11) is available to receive those railway wagons which, in special cases, are to be removed from the actual sequence of the process.

*Fig.1*

*Fig.2*

1

Fig.3